# DEMANDE DE BREVET EUROPEEN

(11) **EP 2 859 813 A1**
(43) Date de publication de la demande: **15.04.2015**
(21) Numéro de dépôt: 14188438.7
(22) Date de dépôt: 10.10.2014
(51) Int. Cl.: A47B 77/02, F16B 12/20, F16B 12/24, B29C 47/00

(54) **Plan de travail extrudé**

(30) Priorité: 14.10.2013 FR 1359992
(71) Demandeur: Castorama France, 59175 Templemars (FR)
(72) Inventeur: Guyader, Christophe, 59700 Marcq En Baroeul (FR); Aoudjit, Embarka, 59510 Hem (FR)
(74) Mandataire: Cabinet Plasseraud

(57) **Abrégé**

L'invention concerne un plan de travail, notamment pour cuisine ou salle de bain, obtenu par extrusion comprenant un corps principal (1) présentant :
- un plateau supérieur (2) ;
- un plateau inférieur (3) adapté pour être fixé sur un meuble (10) ou un pied à équiper d'un tel plan (1) ;
- un chant avant (4) ;
- un chant arrière (5) ;
- une pluralité de cloisons de rigidification (6) parallèles entre elles et définissant des cavités longitudinales creuses (7) dans un espace intérieur (E) de corps principal ;
dans lequel le corps principal (1) est obtenu par extrusion d'un mélange de particules constituées de fibres naturelles et de matière plastique.

## Description

La présente invention est relative aux plans de travail, notamment pour cuisine ou salle de bain.

Classiquement, un plan de travail se présente sous la forme d'un panneau globalement parallélépipédique, les bords du parallélépipède pouvant éventuellement être arrondis, plein et réalisé en aggloméré de bois, tel qu'un panneau lamellé-collé, un panneau de fibres à densité moyenne, un panneau de grandes particules orientées ou autre, ou encore en matière plastique.

De tels plans de travail présentent de nombreux inconvénients, notamment en termes de poids, avec entre autres conséquences induites une difficulté de manipulation et d'installation, ainsi qu'un coût financier et environnemental conséquent au cours de leur fabrication et de leur transport.

Par ailleurs, de tels plans de travail pleins en aggloméré de bois ne donnent pas entière satisfaction sur le plan de la résistance à l'eau et peuvent être sujets à l'infiltration d'eau dans leur épaisseur risquant de provoquer l'apparition de bombements localisés sur les surfaces visibles pour un utilisateur, induire un décollement du placage décoratif éventuellement appliqué sur le plan de travail, en particulier au niveau des chants, et ainsi nuire à la perception de qualité du produit, mais également d'altérer les propriétés mécaniques du plan de travail dans le temps, celui-ci risquant de s'affaisser, voire de céder dans des zones où l'humidité se serait concentrée.

Dans le cas de plans de travail pleins réalisés en matière plastique, outre les inconvénients précités en termes de poids et de coûts, se posent des problèmes de résistances aux chocs, à l'usure et aux rayures, les plaques pleines de matière plastique utilisées pour former de tels plans de travail étant particulièrement sensibles aux chocs, ce qui engendre un risque de casse, notamment lors de leur transport et/ou de leur manipulation, ainsi qu'à l'usure et aux rayures qui peuvent être formées lors du transport ou du stockage des plans de travail, par exemple empilés les uns sur les autres, ou encore au cours de leur cycle de vie.

Il a été proposé, par exemple dans le document CN202919399, de réaliser un plan de travail par extrusion de matière plastique à travers une filière d'extrusion permettant d'obtenir un plan de travail se présentant sous la forme d'un caisson creux renforcé présentant un plateau supérieur et un plateau inférieur entre lesquels s'étendent des nervures longitudinales s'étendant parallèlement entre elles et à la direction d'extrusion.

Néanmoins, un tel plan de travail ne donne toujours pas entière satisfaction, notamment en termes de coûts, le coût de la matière plastique à partir de laquelle est réalisé le plan de travail demeurant relativement élevé, mais également en termes de résistance aux chocs, à l'usure et aux rayures, ainsi qu'en termes de stabilité dimensionnelle dans le temps. Par ailleurs, bien qu'allégé par rapport à un même plan de travail réalisé sous la forme d'un panneau plein en matière plastique, un tel plan de travail s'avère toujours relativement lourd, ce qui, comme évoqué plus haut, induit des difficultés de manipulation et d'installation, mais également un coût important pour son transport, que cela soit sur le plan pécuniaire ou sur celui de l'empreinte carbone engendrée lors de son transport.

La présente invention vise à pallier à tout ou partie de ces inconvénients.

Ainsi, selon un aspect, l'invention se rapporte à un plan de travail, notamment pour cuisine ou salle de bain, obtenu par extrusion selon une direction d'extension comprenant un corps principal présentant :
- un plateau supérieur s'étendant dans la direction d'extension entre un premier bord d'extrémité et un deuxième bord d'extrémité, et dans une direction transverse perpendiculaire à la direction d'extension entre un bord avant et un bord arrière ;
- un plateau inférieur adapté pour être fixé sur un meuble ou un pied à équiper d'un tel plan et s'étendant dans la direction d'extension entre un premier bord d'extrémité et un deuxième bord d'extrémité, et dans la direction transverse perpendiculaire à la direction d'extension entre un bord avant et un bord arrière ;
- un chant avant s'étendant dans la direction d'extension entre un premier bord d'extrémité et un deuxième bord d'extrémité et reliant le bord avant du plateau supérieur et le bord avant du plateau inférieur dans une direction d'élévation perpendiculaire à la direction d'extension et à la direction transverse ;
- un chant arrière s'étendant dans la direction d'extension entre un premier bord d'extrémité et un deuxième bord d'extrémité et reliant le bord arrière du plateau supérieur et le bord arrière du plateau inférieur dans la direction d'élévation, et ;
- une pluralité de cloisons de rigidification s'étendant essentiellement parallèlement les unes aux autres dans la direction d'extension entre un premier bord d'extrémité et un deuxième bord d'extrémité et reliant les plateaux supérieur et inférieur dans la direction d'élévation de façon à définir entre elles des cavités longitudinales creuses dans un espace intérieur de corps principal délimité par les plateaux supérieur et inférieur et les chants avant et arrière ;
dans lequel :
- les premiers bords d'extrémité des plateaux supérieur et inférieur, des chants avant et arrière et des cloisons de rigidification définissent un premier bord d'extrémité du plan de travail et les deuxièmes bords d'extrémité des plateaux supérieur et inférieur, des chants avant et arrière et des cloisons de rigidification définissent un deuxième bord d'extrémité du plan de travail, et ;
- les plateaux supérieur et inférieur et les chants avant et arrière présentent chacun une face intérieure orientée vers l'espace intérieur du corps principal et une face extérieure opposée à la face intérieure,
et dans lequel le corps principal est obtenu par extrusion dans une direction d'extrusion correspondant à la direction d'extension d'un mélange de particules constituées de fibres naturelles et de matière plastique.

Grâce à ces dispositions, l'invention propose un plan de travail économique à réaliser, à transporter et à manipuler, présentant un poids réduit par rapport aux plans de travail connus, ainsi qu'une résistance aux chocs, à l'usure et aux rayures améliorée, et meilleure stabilité dimensionnelle dans le temps et une résistance à l'eau accrue.

Par ailleurs, le plan de travail selon la présente invention peut s'inscrire dans une démarche de conception éco-responsable, le matériau mis en oeuvre pour le réaliser pouvant être issu de filières de recyclage.

Plus précisément, soucieuse de l'impact que ses activités représentent pour l'environnement, la demanderesse a entrepris d'intégrer la conception de ses produits dans un concept d'économie circulaire, ayant notamment pour principe de donner une seconde vie à des produits ayant déjà eu une existence sous la forme d'un article manufacturé et arrivé en fin de vie sous cette forme, en collectant de tels produits pour en récupérer les matériaux constitutifs et revaloriser ces matériaux en les utilisant pour fabriquer de nouveaux produits sous une nouvelle forme.

Une telle démarche de conception est particulièrement singulière, car on ne se limite pas à l'utilisation de déchets post-industriels, tels que des copeaux de bois issus de scieries ou encore des chutes de matière plastique résultant d'opérations d'usinage et/ou de mise en forme de pièces plastiques dans l'industrie plasturgique, pour obtenir un matériau permettant de réaliser de nouveaux articles. En effet, l'existence et le volume des déchets issus de telles filières industrielles sont essentiellement dus à des rendements de process industriels perfectibles, qui, en étant améliorés et optimisés, pourraient générer une quantité de déchets réduite.

L'idée exploitée dans le cadre de la présente invention est de valoriser les déchets post-consommateurs, à savoir des articles manufacturés arrivés en fin de vie, ayant parfois eu une durée de vie relativement courte, pour les retransformer et réaliser à partir de leurs matériaux constitutifs retraités de nouveaux produits remis en circulation sous une nouvelle forme.

Dans le cadre de la présente invention, le plan de travail proposé est obtenu par extrusion à partir d'un mélange comprenant des particules de fibres naturelles, telles que des particules de bois, et de la matière plastique.

Ces particules de fibres naturelles, et en particulier de bois, pourront ainsi provenir d'articles tels que des palettes de transport, des planches, des caisses, des cageots ou autres bois d'emballage, ou encore des éléments de mobilier arrivés en fin de vie. Plus généralement, pour réaliser les particules de fibres naturelles entrant dans la composition du mélange à partir duquel est réalisé le plan de travail, l'invention se propose d'utiliser des articles entrant dans la classe de bois A, qui comprend notamment les bois naturels secs et humides, ainsi que les vieux bois oxydés et décomposés en surface, et dans la classe de bois B, qui comprend notamment les bois de démolition, les bois de déchèterie, les fenêtres et meubles en bois, ainsi que les bois de panneaux de particules.

De tels produits et articles contenant des fibres naturelles sont collectés et retraités dans des filières de recyclage post-consommateur pour que leur matériau constitutif puisse être réutilisé pour fabriquer de nouveaux articles. Ainsi, dans le cadre de la présente invention, de tels articles, après avoir été collectés, sont broyés en particules de différentes dimensions, puis ces particules sont triées de sorte à éliminer les éléments indésirables et ne conserver que des particules de fibres naturelles, ou à tout le moins limiter autant que possible le taux d'impuretés parmi ces particules de fibres naturelles. Ces particules de fibres naturelles sont alors tamisées dans une opération de tamisage encore appelée criblage pour séparer les particules en fonction de leur granulométrie et ne conserver que les particules de taille souhaitée. Dans une opération finale, les particules de fibres naturelles triées et calibrées sont séchées pour obtenir un matériau exploitable, qui pourra se présenter sous la forme d'une farine ou d'une poudre de fibres naturelles.

De telles particules de fibres naturelles entrant dans la composition du matériau formant le plan de travail selon l'invention, présentent entre autres avantages d'être peu onéreuses et plus légères que de la matière plastique.

Par ailleurs, la matière plastique entrant dans la composition du plan de travail selon l'invention, peut par exemple provenir d'articles manufacturés récupérés et retraités pour en récupérer la matière plastique qu'ils contiennent, tels que du mobilier de jardin, des fenêtres, des volets roulants, des panneaux occultants ou autres. Ainsi, la matière plastique récupérée pourra comprendre du polychlorure de vinyle (PVC), du polytéréphtalate d'éthylène (PET), du polypropylène (PP) ou autres.

Une fois ces deux types de matériaux récupérés, par exemple sous la forme de particules calibrées de fibres naturelles et de granulés de matière plastique, on en réalise un mélange à chaud de façon à faire fondre la matière plastique et ainsi enrober les particules de fibres naturelles.

La matière plastique constitue ainsi un liant pour les particules de fibres naturelles permettant la tenue mécanique d'un objet réalisé à partir de ce matériau composite particules de fibres naturelle / matière plastique, et isolant ces particules de l'humidité environnante.

Dans des modes de réalisation préférés de l'invention, on peut éventuellement avoir recours en outre à l'une et/ou à l'autre des dispositions suivante :
- le mélange à partir duquel le plan de travail est obtenu comprend entre 50% et 85% en masse, et de préférence 60% en masse, de particules de fibres naturelles ;
- la taille des particules de fibres naturelles entrant dans la composition du mélange à partir duquel le plan de travail est obtenu présente une taille moyenne de particule comprise entre 0,1 mm et 3 mm, et de préférence entre 0,5 et 0,8 mm ;
- le mélange à partir duquel le plan de travail est obtenu comprend entre 15% et 50% en masse, et de préférence 40% en masse, de matière plastique, et entre 0% et 5% en masse d'adjuvants. De tels adjuvants pourront par exemple être des lubrifiants, des dispersants, des ignifugeants, des stabilisants UV, des pigments, etc..., permettant notamment d'améliorer les capacités de fluage et/ou de cohésion du matériau constituant le plan de travail afin de faciliter son extrusion. Lorsque l'on utilise de la matière plastique issue de filières de recyclage, il est possible que de tels adjuvants puissent avoir déjà été présents dans la matière des produits récupérés et retraités pour le recyclage. Il ne sera alors par conséquent pas forcément nécessaire d'en ajouter au mélange à partir duquel est réalisé le plan de travail selon l'invention.

- les cloisons de rigidification présentent un écartement variable dans la direction transverse ;
- la face extérieure du plateau inférieur présente une rainure s'étendant dans la direction d'extension, au voisinage du bord avant et/ou du bord arrière dudit plateau inférieur ;
- le plateau supérieur, le plateau inférieur, le chant avant et/ou le chant arrière est(sont) revêtu(s) sur leur(s) face(s) extérieures d'un plaquage décoratif réalisé en un matériau distinct de celui du corps principal ;
- le plaquage décoratif et le corps principal sont obtenus par co-extrusion. On obtient ainsi un plan de travail fini, comprenant le corps principal pourvu d'un plaquage décoratif, en une seule étape de fabrication, ce qui permet d'optimiser le processus de fabrication d'un tel plan de travail et des gains économiques et en termes de cadence importants.
- on prévoit une découpe définissant une ouverture de réception d'un équipement, tel qu'un évier, un lavabo, une plaque de cuisson ou autre, ladite découpe définissant dans la direction transverse un bord de découpe avant et un bord de découpe arrière sur le plateau supérieur, et dans lequel au moins deux cloisons de rigidification sont prévues entre le bord de découpe avant et le chant avant d'une part, et entre le bord de découpe arrière et le chant arrière d'autre part ;
- le plateau supérieur, le plateau inférieur, le chant avant, le chant arrière et les cloisons de rigidification présentent chacun une épaisseur sensiblement constante, et dans lequel ledit plateau supérieur, ledit plateau inférieur, ledit chant avant, ledit chant arrière et/ou lesdites cloisons de rigidification présentent localement des renflements s'étendant dans la direction d'extension et adaptés pour recevoir un élément de fixation d'un profilé d'assemblage de deux plans de travail adjacents.

Selon un autre aspect, l'invention propose un ensemble comprenant un plan de travail tel que décrit précédemment et un meuble, notamment de cuisine ou de salle de bain, sur lequel est fixé le plateau inférieur du plan de travail. Un tel meuble pourra par exemple être un caisson de rangement de cuisine ou de salle de bain, un ilot central de cuisine ou encore un piétement recevant le plan de travail. Sans sortir du cadre de la présente invention, un tel plan de travail pourra également être directement fixé à un mur, par exemple au niveau de son chant arrière et/ou d'un de ses bords d'extrémité.

Selon encore un autre aspect, l'invention propose un procédé de réalisation d'un ensemble tel que décrit précédemment, comprenant les étapes suivante :
- on prépare un mélange de particules de fibres naturelles et de matière plastique ;
- on extrude le mélange obtenu à travers une filière d'extrusion selon une direction d'extrusion correspondant à la direction d'extension du plan de travail ;
- on fournit un meuble, notamment de cuisine ou de salle de bain, et :
- on fixe le plateau inférieur du plan de travail sur le meuble.

La présente invention porte également sur un ensemble comprenant un plan de travail tel que décrit plus haut et un équipement, tel qu'un évier, un lavabo, une plaque de cuisson, reçu à l'intérieur de l'ouverture, un dispositif d'étanchéité étant prévu entre ledit plan de travail et ledit équipement au voisinage de ladite ouverture.

Selon un autre aspect, l'invention propose également un ensemble comprenant :
- un premier et un deuxième plans de travail tels que décrit précédemment, le premier plan de travail s'étendant selon une première direction d'extension et présentant une première portion d'assemblage et le deuxième plan de travail s'étendant selon une deuxième direction d'extension et présentant une deuxième portion d'assemblage, et ;
- un dispositif d'assemblage s'étendant entre la première et la deuxième portions d'assemblage.

Dans une forme de réalisation de l'ensemble selon cet aspect de l'invention :
- la première direction d'extension et la deuxième direction d'extension sont sensiblement parallèles, et la première portion d'assemblage est définie sur le chant avant du premier plan de travail, et la deuxième portion d'assemblage est définie sur le chant arrière du deuxième plan de travail ;

Selon une disposition particulière, le plateau inférieur du premier plan de travail présente dans la direction d'élévation un décrochement s'étendant selon la première direction d'extension et comprenant une première portion s'étendant dans la direction d'élévation et une deuxième portion s'étendant dans la direction transverse et se terminant par le bord avant relié au chant avant, lesdites première et deuxième portions définissant avec ledit chant avant la première portion d'assemblage, et le plateau supérieur du deuxième plan de travail présente dans la direction d'élévation un décrochement s'étendant selon la deuxième direction d'extension et comprenant une première portion s'étendant dans la direction d'élévation et une deuxième portion s'étendant dans la direction transverse et se terminant par le bord arrière relié au chant arrière, lesdites première et deuxième portions définissant avec ledit chant arrière la deuxième portion d'assemblage ;

Dans une autre forme de réalisation de l'ensemble selon cet aspect de l'invention :
- la première direction d'extension et la deuxième direction d'extension sont sensiblement perpendiculaires,
- la première portion d'assemblage est définie par le deuxième bord d'extrémité du premier plan de travail
- et la deuxième portion d'assemblage est définie sur le chant avant du deuxième plan de travail.

Selon une disposition particulière, le dispositif d'assemblage comprend au moins deux éléments mâles présentant une section transversale complémentaire de celles des cavités du premier plan de travail, lesdits éléments mâles présentant chacun dans la direction d'extension du premier plan de travail une première extrémité et une deuxième extrémité, ladite première extrémité étant fixée sur le deuxième plan de travail, en particulier sur le chant avant du deuxième plan de travail, et ladite deuxième extrémité s'étendant à l'intérieur de la cavité associée du premier plan de travail. Avantageusement les premières extrémités de chacun de ces éléments mâles peuvent être collés sur le deuxième plan de travail. Plus précisément, les premières extrémités de chacun de ces éléments mâles peuvent être collés sur le chant avant du deuxième plan de travail, ou sur une cloison de ridification du deuxième plan de travail au niveau d'une découpe réalisée dans le chant avant de ce deuxième plan de travail. Les premières extrémités de ces éléments mâles peuvent également être reliées entre elles et fixées sur le deuxième plan de travail par l'intermédiaire d'une platine de fixation. Par ailleurs, les deuxièmes extrémités des éléments mâles sont avantageusement insérées en force, c'est-à-dire avec serrage, à l'intérieur des cavités de section complémentaires du premier plan de travail. A cet effet, les deuxièmes extrémités des éléments mâles peuvent être pourvues d'ailettes flexibles adaptées pour rattraper les jeux pouvant exister entre ces deuxièmes extrémités et les cavités et à générer un effort de serrage entre ces éléments. En variante ou en complément, on peut prévoir de fixer par exemple par vissage ou par collage les deuxièmes extrémités des éléments mâles à l'intérieur des cavités associées du premier plan de travail.

Dans encore une autre forme de réalisation de l'ensemble selon cet aspect de l'invention :
- la première direction d'extension et la deuxième direction d'extension sont sensiblement perpendiculaires ;
- le premier plan de travail présente un biseau d'assemblage au niveau du deuxième bord d'extrémité, ledit biseau d'assemblage formant un angle de 45° avec la direction d'extension dudit premier plan de travail,
- le deuxième plan de travail présente un biseau d'assemblage au niveau du premier bord d'extrémité, ledit biseau d'assemblage formant un angle de 45° avec la direction d'extension dudit deuxième plan de travail,
- la première portion d'assemblage est définie par le premier biseau d'assemblage et la deuxième portion d'assemblage est définie par le deuxième biseau d'assemblage.

Selon une disposition particulière, le dispositif d'assemblage comprend au moins deux éléments mâles comprenant :
- une première portion présentant une section transversale complémentaire de celles des cavités du deuxième plans de travail et présentant une première extrémité s'étendant à l'intérieur de la cavité associée du deuxième plan de travail, et une deuxième extrémité, et ;
- une deuxième portion présentant une section transversale complémentaire de celles des cavités du premier plans de travail et présentant une deuxième extrémité s'étendant à l'intérieur de la cavité associée du premier plan de travail et une deuxième extrémité, lesdites premières et deuxièmes portions étant reliées entre elles au niveau desdites deuxièmes extrémités et s'étendant sensiblement perpendiculairement.

Dans encore une autre forme de réalisation de l'ensemble selon cet aspect de l'invention :
- la première direction d'extension et la deuxième direction d'extension sont confondues, et
- la première portion d'assemblage est définie par le deuxième bord d'extrémité du premier plan de travail et la deuxième portion d'assemblage est définie par le premier bord d'extrémité du deuxième plan de travail.

Selon une disposition particulière, le dispositif d'assemblage comprend au moins deux éléments mâles présentant une section transversale complémentaire de celles des cavités des premier et deuxième plans de travail, lesdits éléments mâles présentant chacun dans la direction d'extension du premier plan de travail une première extrémité et une deuxième extrémité, ladite première extrémité s'étendant à l'intérieur de la cavité associée du deuxième plan de travail et ladite deuxième extrémité s'étendant à l'intérieur de la cavité associée du premier plan de travail. Avantageusement, les premières et deuxièmes extrémités des éléments mâles sont avantageusement insérées en force, c'est-à-dire avec serrage, à l'intérieur des cavités de section complémentaires des premier et deuxième plan de travail. A cet effet, les premières et deuxièmes extrémités des éléments mâles peuvent être pourvues d'ailettes flexibles adaptées pour rattraper les jeux pouvant exister entre ces premières et deuxièmes extrémités et les cavités et à générer un effort de serrage entre ces éléments. En variante ou en complément, on peut prévoir de fixer par exemple par vissage ou par collage les premières et deuxièmes extrémités des éléments mâles à l'intérieur des cavités associées des premier et deuxième plans de travail.

Selon une disposition avantageuse de l'invention, le dispositif d'assemblage comprend un profilé d'assemblage présentant un premier logement recevant la première portion d'assemblage du premier plan de travail et un deuxième logement recevant la deuxième portion d'assemblage du deuxième plan de travail.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 représente une vue schématique en perspective illustrant un exemple de mise en oeuvre d'un plan de travail selon l'invention ;
- la figure 1a est une vue agrandie du détail désigné IA de la figure 1 visant à illustrer la composition du matériau constituant le plan de travail selon l'invention ;
- la figure 1b est une vue agrandie du détail désigné IB de la figure 1 ;
- les figures 2a, 2b et 2c sont des vues schématiques en coupe transversale du plan de travail selon l'invention visant à illustrer différentes variantes d'application du placage décoratif sur le corps principal ;
- la figure 3 représente une vue en coupe selon la ligne III-III de la figure 1 visant à illustrer la mise en place et la fixation d'un équipement à travers une ouverture réalisée dans le plan de travail selon l'invention ;
- les figures 4a et 4b sont des vues schématiques de dessus visant à illustrer l'assemblage de deux plans de travail selon l'invention suivant une première configuration d'assemblage ;
- la figure 4c est une vue schématique en coupe transversale visant à illustrer un exemple d'assemblage de deux plans de travail selon l'invention selon la première configuration d'assemblage illustré aux figures 4a et 4b ;
- les figures 5a et 5b sont des vues schématiques de dessus visant à illustrer l'assemblage de deux plans de travail selon l'invention suivant une deuxième configuration d'assemblage ;
- la figure 5c est une vue schématique en perspective visant à illustrer un exemple d'assemblage de deux plans de travail selon l'invention selon la deuxième configuration d'assemblage illustré à la figure 5a ;
- la figure 5d est une vue schématique en perspective visant à illustrer un exemple d'assemblage de deux plans de travail selon l'invention selon la deuxième configuration d'assemblage illustré à la figure 5b ;
- la figure 6 est une vue schématique de dessus visant à illustrer l'assemblage de deux plans de travail selon l'invention suivant une troisième configuration d'assemblage ;
- la figure 6a est une vue schématique en perspective visant à illustrer un exemple d'assemblage de deux plans de travail selon l'invention selon la troisième configuration d'assemblage illustré à la figure 6 ;
- la figure 7 illustre un exemple de dispositif d'assemblage entre deux plans de travail selon l'invention mettant en oeuvre un système à tirants.

Sur les différentes figures, les mêmes références désignent des éléments identiques ou similaires.

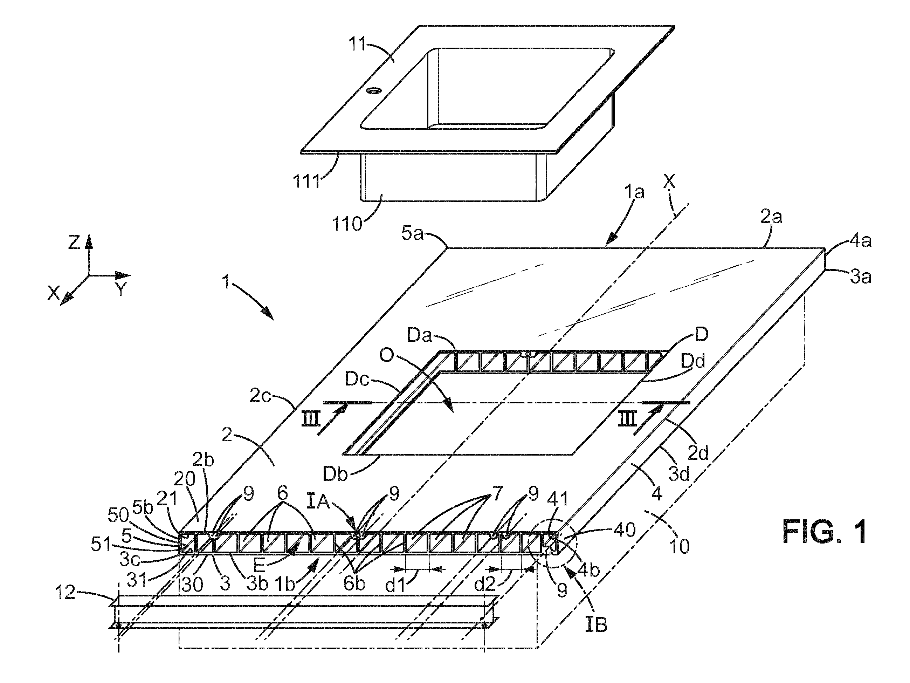

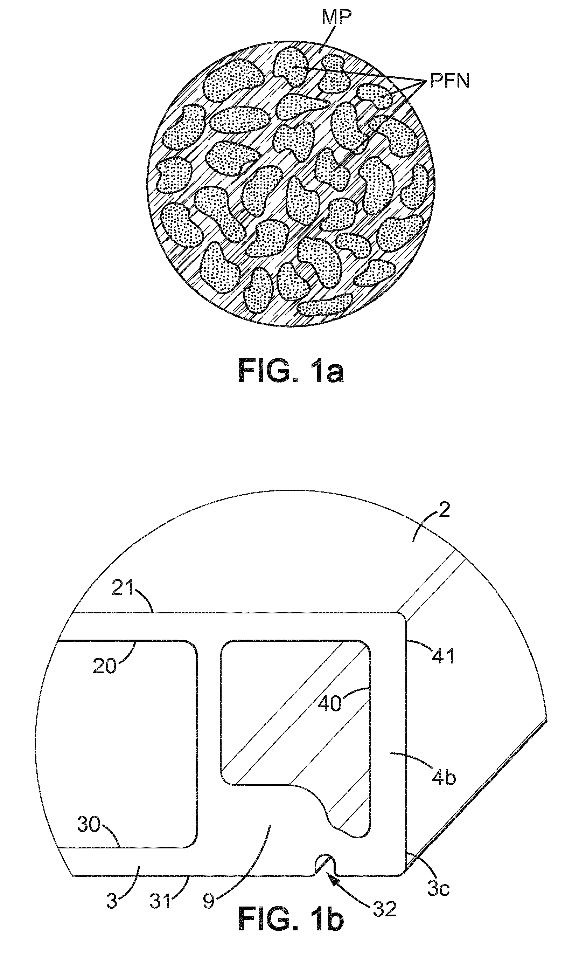

La figure 1 représente en perspective un plan de travail P selon l'invention fixé sur un meuble 10 parallélépipédique illustré de manière schématique en traits mixtes.

Comme visible sur cette figure 1, le plan de travail P selon l'invention comprend un corps principal 1 globalement parallélépipédique, dont les bords longitudinaux peuvent éventuellement être arrondis. Plus précisément, le corps principal 1 se présente sous la forme d'un caisson creux délimité par un plateau supérieur 2, un plateau inférieur 3, un chant avant 4 et un chant arrière 5. L'espace interne E du caisson creux ainsi défini est subdivisé par des cloisons de rigidification 6 parallèles entre elles, reliant les plateaux supérieur 2 et inférieur 3 et définissant entre elles des cavités longitudinales 7. Comme cela apparaît sur cette figure 1, le plateau supérieur 2, le plateau inférieur 3, le chant avant 4, le un chant arrière 5 et les cloisons 6 présentent chacun une épaisseur sensiblement constante.

Le corps principal 1 du plan de travail illustré sur cette figure 1 s'étend selon une direction d'extension X entre un premier bord d'extrémité 1a, défini par des premiers bords d'extrémité 2a, 3a, 4a, 5a, 6a appartenant respectivement au plateau supérieur, au plateau inférieur, au chant avant 4, au chant arrière 5 et aux différentes cloisons de rigidification 6, et un deuxième bord d'extrémité 1b, défini par des deuxièmes bords d'extrémité 2b, 3b, 4b, 5b, 6b appartenant respectivement au plateau supérieur, au plateau inférieur, au chant avant 4, au chant arrière 5 et aux différentes cloisons de rigidification 6.

Par ailleurs, le corps principal 1 du plan de travail illustré sur cette figure 1 s'étend selon une direction transverse Y perpendiculaire à la direction d'extension X entre un bord arrière 1d, défini par des bords arrières 2d, 3d, appartenant respectivement au plateau supérieur 2 et au plateau inférieur 3, et par le chant arrière 5, et un bord avant 1c, défini par des bords avants 2c, 3c, appartenant respectivement au plateau supérieur 3 et au plateau inférieur 3, et par le chant avant 4.

Les chants avant 4 et arrière 5, ainsi que les cloisons de rigidification 6 s'étendent selon une direction d'élévation Z perpendiculaire à la direction d'extension X et à la direction transverse Y. Les plateaux supérieur 2 et inférieur 3 sont distants dans la direction d'élévation Z. Le bord avant 2c du plateau supérieur 2 est relié au bord avant 3c du plateau inférieur 3 par l'intermédiaire du chant avant 4, et le bord arrière 2d du plateau supérieur 2 est relié au bord arrière 3d du plateau inférieur 3 par l'intermédiaire du chant arrière 5.

Comme visible sur cette figure 1, chacun des plateaux supérieur 2 et inférieur 3 et des chants avant 4 et arrière 5 présentent une face intérieure 20, 30, 40, 50 orientée vers l'espace intérieur E du corps principal 1, et une face extérieure 21, 31, 41, 51 opposée à la face intérieure 20, 30, 40, 50.

Selon l'invention, le corps principal 1 du plan de travail est obtenu par extrusion à travers une filière d'extrusion selon une direction d'extrusion correspondant à la direction d'extension X d'un mélange de particules constituées de fibres naturelles PFN, telles que des particules de bois, et de matière plastique MP.

Comme évoqué plus haut, ces particules de bois ou autre, ainsi que la matière plastique utilisées pour fabriquer le plan de travail selon l'invention peuvent provenir de filières de recyclage retraitant des articles manufacturés en fin de vie pour les transformer en matériaux exploitables pour fabriquer de nouveaux articles.

Comme cela apparaît plus clairement sur la figure 1a représentant en vue agrandie le détail IA de la figure 1, le matériau employé pour extruder le corps principal 1 du plan de travail P selon l'invention comprend essentiellement des particules de fibres naturelles PFN, telles que des particules de bois, à hauteur de 50% à 70% en masse, et de préférence à hauteur de 60% en masse, noyées dans une matrice de matière plastique MP représentant entre 30% et 50% en masse, et de préférence 40% en masse du mélange.

Le mélange peut en outre comprendre entre 0% et 5% en masse d'adjuvants permettant notamment de faciliter l'extrusion du plan de travail. De tels adjuvants peuvent être déjà contenus dans la matière plastique recyclée entrant dans la composition du mélange, ou être ajoutés à celle-ci.

Avec de telles proportions entre particules de fibres naturelles PFN et de matière plastique MP, on atteint un compromis satisfaisant pour le plan de travail entre ses caractéristiques de tenue mécanique, de résistance à aux chocs, à l'usure et aux rayures, de stabilité dimensionnelle dans le temps, de résistance à l'eau (caractère hydrophobe du matériau), de poids et de coûts, à la fois de fabrication et de transport.

Selon une disposition particulière de l'invention, les particules de fibres naturelles utilisées présentent une taille de particule comprise entre 0,1 mm et 1 mm, et de préférence comprise entre 0,5 mm et 0,8 mm. La taille de ces particules est choisie de sorte à atteindre un compromis satisfaisant entre les paramètres de coûts, d'homogénéité du mélange avec la matière plastique (une grosse particule nécessitera moins de matière plastique pour être totalement enrobée qu'une pluralité de plus petites particules), et de prise d'humidité (une particule de fibre naturelle non enrobée par de la matière plastique étant susceptible d'absorber de l'eau avec laquelle elle est en contact et générer un bombement localisé pouvant nuire à la tenue mécanique du plan de travail, ainsi qu'à son esthétique).

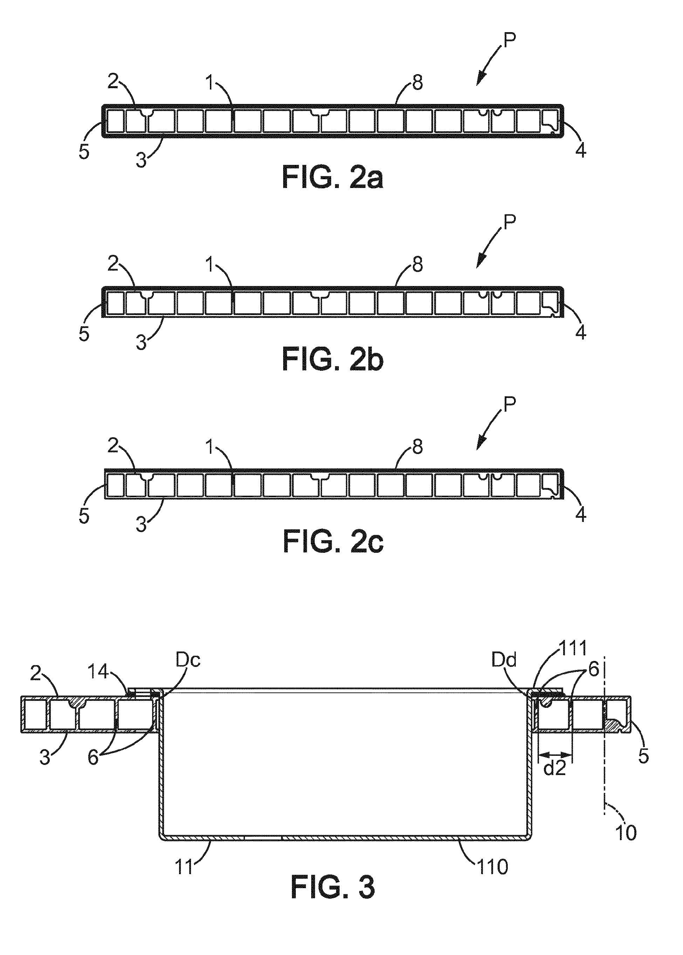

Selon une disposition avantageuse de l'invention, on peut prévoir, comme illustré aux figures 2a à 2c, que le corps principal 1 du plan de travail soit revêtu sur ses faces extérieures d'un placage décoratif 8 réalisé dans un matériau différent du matériau constitutif du corps principal 1 et conférant un aspect esthétique amélioré au plan de travail.

Un tel placage décoratif 8 pourra par exemple être appliqué au choix :
- sur tout le tour du corps principal 1, à savoir sur les faces extérieures 20, 30, 40, 50 de plateaux supérieur 2 et inférieur 3 et des chants avant 4 et arrière 5, tel qu'illustré à la figure 2a,
- sur les faces visibles du corps principal 1 lorsque le plan de travail est installé sur un meuble 10 formant ilot central, à savoir sur les faces extérieures 20, 40, 50 du plateau supérieur 2 et des chants avant 4 et arrière 5, tel qu'illustré à la figure 2b,
- sur les faces visibles du corps principal 1 lorsque le plan de travail est installé sur un meuble 10 de cuisine avec son chant arrière 5 plaqué contre un mur, à savoir sur les faces extérieures 20, 40 du plateau supérieur 2 et du chant avant 4, tel qu'illustré à la figure 2c.

Avantageusement, un tel placage décoratif 8 est appliqué sur le corps principal 1 du plan de travail en étant co-extrudé avec celui-ci. Ainsi, selon cette disposition, on peut réaliser en une unique étape de fabrication de co-extrusion un plan de travail comprenant un corps principal 1 revêtu d'un placage décoratif 8.

En revenant à la figure 1 (sur laquelle le placage décoratif 8 n'est pas représenté), le corps principal 1 du plan de travail est obtenu par extrusion à travers un masque d'extrusion présentant une ouverture de forme correspondant à la section transversale du corps principal 1. Ce corps principal 1 comporte ainsi une pluralité de cloisons de rigidification 6 longitudinales s'étendant dans la direction d'extension X et définissant des cavités adjacentes 7 subdivisant l'espace interne E du corps principal 1. Une telle conception à cavités du corps principal permet d'alléger le plan de travail par rapport à une conception où le plan de travail est réalisé sous la forme d'un panneau plein.

Par ailleurs, les cloisons de rigidification 6 présentent un écartement variable selon la direction transverse Y. En effet, et comme cela apparaît dans le mode de réalisation illustré sur la figure 1, la distance d1 séparant deux cloisons 6 adjacentes situées dans une portion centrale dans la direction transverse du corps principal 1 est plus grande que la distance d2 séparant deux cloisons 6 adjacentes situées dans une portion d'extrémité dans la direction transverse Y du corps principal 1. Grâce à ces dispositions, on peut choisir d'avoir une densité de cloisons de rigidification 6 plus élevée dans des zones du corps principal du plan de travail où l'on souhaite avoir des propriétés de résistance mécanique plus élevées.

Une telle disposition peut par exemple être exploitée dans le cadre d'une intégration au plan de travail selon l'invention d'un équipement, notamment un équipement de cuisine ou de salle de bain, tel qu'un évier, un lavabo, une plaque de cuisson ou autres.

Ainsi, et tel que représenté sur les figures 1 et 3, le plan de travail P selon l'invention présente une découpe D définissant une ouverture O de réception d'un tel équipement se présentant ici sous la forme d'un évier 11 comprenant essentiellement une cuve 110 et une collerette périphérique 111 d'appui sur la face extérieure 20 du plateau supérieur 2.

La découpe D réalisée dans le plan de travail P définit dans la direction transverse Y un bord de découpe arrière Dc et un bord de découpe avant Dd dans le plateau supérieur 2.

Dans le mode de réalisation illustré sur ces figures 1 et 3, l'équipement reçu par le plan de travail est un évier 11 et la découpe D traverse par conséquent de part en part le plan de travail pour faire passer la cuve 110 à travers l'ouverture O et mettre en appui la collerette d'appui 111 sur le plateau supérieur 2.

En variante, on pourrait néanmoins prévoir que cette découpe D ne débouche pas à travers le plateau inférieur 3 du plan de travail, par exemple dans le cas où l'équipement à intégrer ne nécessite pas de traverser de part en part le plan de travail. Une plaque de cuisson peut être un exemple d'un tel équipement. Dans un tel cas, on pourrait par ailleurs avantageusement tirer profit des cavités 7 présentes au sein du plan de travail pour y faire courir des câbles de connexion électrique ou encore des conduits d'amenée de fluide, tel que du gaz ou de l'eau.

Selon une disposition avantageuse de l'invention, et tel qu'illustré sur la figure 3, le plan de travail est conçu de sorte qu'au moins deux cloisons de rigidification 6 demeurent après avoir réalisé la découpe D entre le bord de découpe avant Dd et le chant avant 4 d'une part, et entre le bord de découpe arrière Dc et le chant arrière 5 d'autre part 5. Ainsi, on garantit que le plan de travail selon l'invention conserve une rigidité suffisante lorsqu'il a été découpé pour y intégrer un équipement, tel qu'un évier 11.

Comme visible sur cette figure 3, un dispositif d'étanchéité, se présentant dans l'exemple représenté sous la forme d'une couche de mastic 14 appliquée sur la périphérie de l'ouverture O réalisée dans le plan de travail et sur laquelle vient prendre appui la collerette d'appui 111 de l'évier, est prévu entre le plan de travail P et l'équipement 11 reçu dans l'ouverture O.

Par ailleurs, et comme visible sur les figures 1 et 3, le plan de travail selon l'invention est destiné à être fixé sur un meuble par l'intermédiaire du plateau inférieur 3.

Selon une disposition avantageuse de l'invention illustrée en particulier sur la figure 1b, la face extérieure 31 du plateau inférieur 3 présente une rainure 32 longitudinale s'étendant dans la direction d'extension X, au voisinage du bord avant 3c du plateau inférieur 3 et/ou au voisinage du bord arrière 3d du plateau inférieur 3.

Dans l'exemple représenté sur ces figures 1 et 3, la rainure 32 est prévue au voisinage du bord avant 3c du plateau inférieur 3.

Cette rainure 32 forme une gouttière permettant de stopper d'interrompre le ruissellement de l'eau qui pourrait provenir de la surface extérieure 20 du plateau supérieur 2 et longer le chant avant 4, puis la face extérieure 30 du plateau inférieur 3.

En plaçant le plan de travail selon l'invention de façon que la paroi frontale 101 du meuble sur lequel il est installé se trouve en retrait dans la direction transverse Y de la rainure 32, on évite que de l'eau s'étendant sur le plateau supérieur 2 du plan de travail ne s'infiltre jusqu'à l'intérieur du meuble 10, le ruissellement d'eau étant interrompu au niveau de cette rainure 32 qui canalise ce ruissellement et provoque la chute au sol de l'eau accumulée en son sein.

Selon un autre aspect de la présente invention, on propose un ensemble comprenant deux plans de travail tels que décrits précédemment et un dispositif d'assemblage entre ces deux plans de travail.

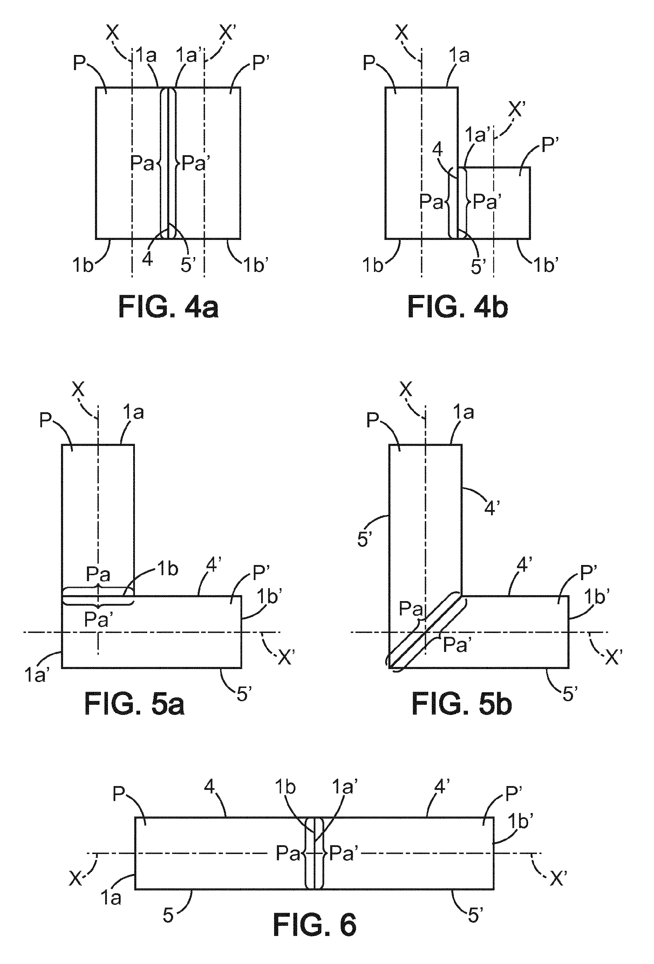

Les figures 4a, 4b, 5a, 5b et 6 illustrent en vue schématique de dessus différentes configurations d'assemblage entre un premier et un deuxième plans de travail P, P' selon l'invention présentant respectivement une première portion d'assemblage Pa et une deuxième portion d'assemblage Pa', un dispositif d'assemblage s'étendant entre ces première et deuxième portions d'assemblage Pa, Pa'.

Ainsi, dans l'exemple représenté aux figures 4a et 4b, les deux plans de travail P, P' sont assemblés l'un à l'autre au niveau de leur chants, les directions d'extension X, X' de ces deux plans de travail P, P' s'étendant essentiellement parallèlement. Ainsi, et comme visible sur ces figures 4a et 4b, la première portion d'assemblage Pa est définie sur le chant avant 4 du premier plan de travail P et la deuxième portion d'assemblage P' est définie sur le chant arrière 5 du deuxième plan de travail P'.

Dans l'exemple illustré sur la figure 4a, les deux plans de travail P, P' présentent la même longueur selon la direction d'extension X, X' et les première et deuxième portions d'assemblage Pa, Pa' sont définies par les surfaces extérieures 40, 50' respectivement du chant avant 4 du premier plan de travail P et du chant arrière 5 du deuxième plan de travail P'. Dans cet exemple de réalisation, les deux plans de travail P, P' sont assemblés côte à côte afin de former un plan de travail de dimension accrue dans la direction transverse Y.

Dans l'exemple illustré sur la figure 4a, les deux plans de travail P, P' présente des longueurs différentes selon la direction d'extension X, X' et les première et deuxième portions d'assemblage Pa, Pa' sont définie par des portions mises en contact des surfaces extérieures 40, 50' respectivement du chant avant 4 du premier plan de travail P et du chant arrière 5 du deuxième plan de travail P'. Dans cet exemple de réalisation, les deux plans de travail P, P' sont assemblés côte à côte afin de former un plan de travail en angle.

Différents dispositifs d'assemblage peuvent être prévus pour réaliser la fixation de deux plans de travail P, P' selon les configurations d'assemblage illustrés sur les figures 4a et 4b.

Ainsi, on pourra par exemple prévoir d'interposer une couche de colle, telle qu'une colle PVC, une colle néoprène ou autre, entre la première portion d'assemblage Pa du premier plan de travail et la deuxième portion d'assemblage Pa' du deuxième plan de travail P.

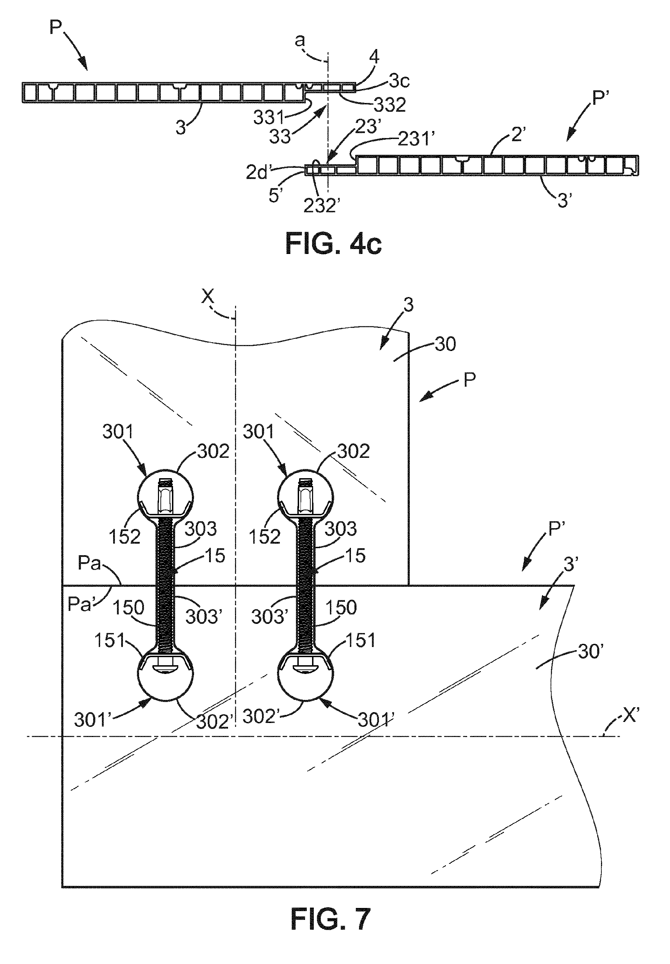

En variante ou en complément, on peut prévoir un dispositif d'assemblage mettant en oeuvre des tirants tel que cela sera décrit plus en détails en référence à la figure 7.

Selon une disposition avantageuse illustrée à la figure 4a, dans des assemblages de plans de travail P, P' conforme aux exemples représentés sur les figures 4a et 4b, on prévoit que le plateau inférieur 3 du premier plan de travail 1 présente dans la direction d'élévation Z un décrochement 33 s'étendant selon la première direction d'extension X et comprenant une première portion 331 s'étendant dans la direction d'élévation Z et une deuxième portion 332 s'étendant dans la direction transverse Y et se terminant par le bord avant 3c relié au chant avant 4, ces première et deuxième portions 331, 332 définissant avec le chant avant 4 la première portion d'assemblage Pa, et le plateau supérieur 2' du deuxième plan de travail P' présente dans la direction d'élévation Z un décrochement 23' s'étendant selon la deuxième direction d'extension X' et comprenant une première portion 231' s'étendant dans la direction d'élévation Z' et une deuxième portion 232' s'étendant dans la direction transverse Y' et se terminant par le bord arrière 2d' relié au chant arrière 5, ces première et deuxième portions 231', 232' définissant avec le chant arrière 5' la deuxième portion d'assemblage Pa'.

Ainsi, dans un tel mode de réalisation, les deux plans de travail adjacents P, P' sont emboîtés l'un dans l'autre par coopération de leurs décrochements respectifs 33, 23' pour assurer leur positionnement. Un dispositif d'assemblage est ensuite prévu entre la première portion d'assemblage Pa et la deuxième portion d'assemblage Pa' ainsi définie.

Un tel dispositif d'assemblage peut par exemple comprendre une couche de colle appliquée sur les première et deuxième portions d'assemblage Pa, Pa'.

En variante ou en complément, on peut également prévoir que le dispositif d'assemblage comprenne des éléments de fixation traversant, tels que des vis ou des rivets, fixés par le dessous des plans de travail P, P' et s'arrêtant à l'intérieur de ceux-ci, c'est-à-dire ne faisant pas saillie des plateaux supérieurs 2, 2' de ces plans de travail P, P'. En particulier, dans l'assemblage illustré à la figure 4c où seul un axe a est représenté pour illustrer l'endroit de passage des éléments de fixation traversant, on peut prévoir que de tels éléments de fixation traversant soient insérés à travers le plateau inférieur 3' du deuxième plan de travail P', passent à travers la deuxième portion 232' du décrochement 23 prévu sur le plateau supérieur 2' du deuxième plan de travail P', puis à travers la deuxième portion de fixation 332 du décrochement 33 prévu sur le plateau inférieur 3 du premier plan de travail P, et s'arrêtent dans l'espace intérieur délimité par la deuxième portion de fixation 332 du décrochement 33 prévu sur le plateau inférieur 3 et la face intérieure 20 du plateau supérieur 2 du premier plan de travail P.

Dans l'exemple représenté aux figures 5a et 5b, les deux plans de travail P, P' sont assemblés l'un à l'autre avec leur directions d'extension X, X' s'étendant essentiellement perpendiculairement pour former un plan de travail en angle.

Dans le mode de réalisation illustré à la figure 5a, la première portion d'assemblage Pa est définie par le deuxième bord d'extrémité 1b du premier plan de travail P et la deuxième portion d'assemblage Pa' est définie sur le chant avant 4' du deuxième plan de travail P'.

A nouveau dans ce mode de réalisation, le dispositif d'assemblage entre les deux plans de travail P, P' peut par exemple comprendre une couche de colle appliquée sur les première et deuxième portions d'assemblage Pa, Pa'.

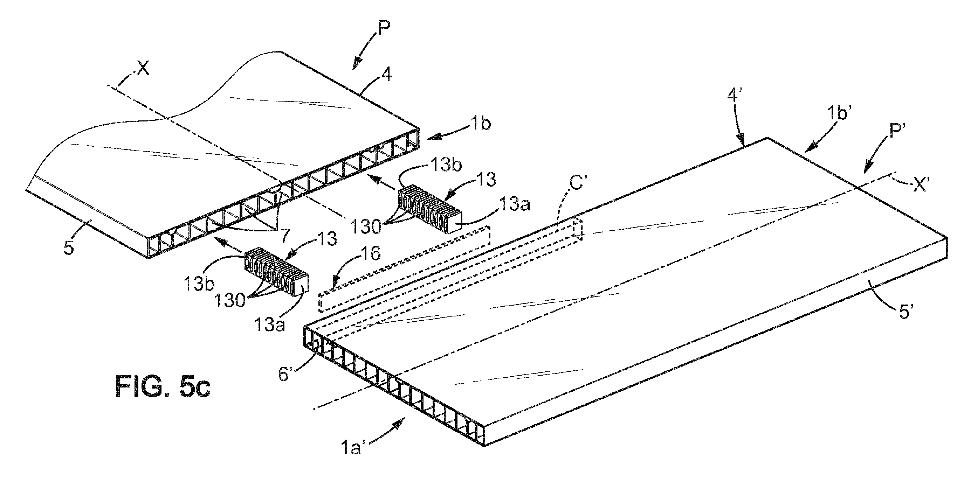

En variante ou en complément, on peut prévoir que le dispositif d'assemblage de deux plans de travail P, P' selon la configuration illustrée à la figure 5a, comprenne un dispositif de fixation tel que celui représenté à la figure 5c.

Sur cette figure 5c, on observe que le dispositif d'assemblage comprend deux éléments mâles 13 présentant une section transversale complémentaire à celle des cavités 7 du premier plan de travail P. Chaque élément mâle 13 est inséré, par exemple avec serrage, dans une cavité 7 du premier plan de travail P, ces cavités étant espacées dans la direction transverse Y du premier plan de travail P afin de conférer une bonne stabilité à l'assemblage des deux plans de travail P, P'. Des ailettes flexibles 130 peuvent par exemple être prévues pour rattraper les jeux et générer un effort de serrage entre chaque élément mâle 13 et la cavité 7 qui le reçoit. En variante ou en complément, on peut prévoir de fixer les éléments mâles (13) à l'intérieur des cavités 7 par collage et/ou par vissage à travers le plateau inférieur 3 du premier plan de travail P.

Ces éléments mâle 13, lorsqu'ils sont introduits dans des cavités respectives 7 du premier plan de travail P, présentent chacun une première extrémité 13a affleurant par exemple sensiblement le deuxième bord d'extrémité 1b du premier plan de travail P et une deuxième extrémité 13b s'étendant à l'intérieur d'une cavité 7 associée du premier plan de travail P. L'assemblage du premier plan de travail P au deuxième plan de travail P' peut est alors réalisé par collage des premières extrémités 13a des éléments mâles 13 sur le chant avant 4' du deuxième plan de travail P'.

En variante, et tel qu'illustré en traits pointillés sur la figure 5c, les premières extrémités 13a des éléments mâles 13 peuvent être reliées entre elles au moyen d'une platine de fixation 16. Cette platine de fixation peut être directement fixée sur le chant avant 4' du deuxième plan de travail P'. En variante, et tel qu'illustré en traits pointillés sur cette figure 5c, on peut prévoir que le chant avant 4' du deuxième plan de travail P' présente une découpe C' dans sa zone d'assemblage au premier plan de travail P, et que les premières extrémités 13a des éléments mâles 13 soient fixées, directement ou via la platine de fixation 16, sur une cloisons de rigidification 6' du deuxième plan de travail P' que laisse apparaître cette découpe C'. Dans un tel cas, il faudra prévoir que les éléments mâles 13 soient insérés à l'intérieur des cavités associées 7 du premier plan de travail de sorte que les premières extrémités 13a, éventuellement équipées de la platine de fixation 16, fassent saillie du deuxième bord d'extrémité 1b du premier plan de travail P dans la direction d'extension X de celui-ci, d'une distance correspondant à la profondeur de la découpe C' dans la direction tranvserve Y' du deuxième plan de travail P'.

Dans l'exemple de réalisation illustré à la figure 5b, les deux plans de travail P, P' à assembler ont subi une opération de découpe de façon à définir une interface d'assemblage à 45° entre les portions d'assemblage Pa, Pa' de ces deux plans de travail P, P'.

Ainsi, dans ce mode de réalisation, les deux plans de travail P, P', une fois extrudés, sont découpés à 45° au niveau du deuxième bord d'extrémité 1b pour le premier plan de travail P et du premier bord d'extrémité 1a' pour le deuxième plan de travail P', les portions d'assemblage Pa, Pa' étant définies par les bords découpés à 45° de chacun des plans de travail P, P'.

A nouveau dans ce mode de réalisation, le dispositif d'assemblage entre les deux plans de travail P, P' peut par exemple comprendre une couche de colle appliquée sur les première et deuxième portions d'assemblage Pa, Pa'.

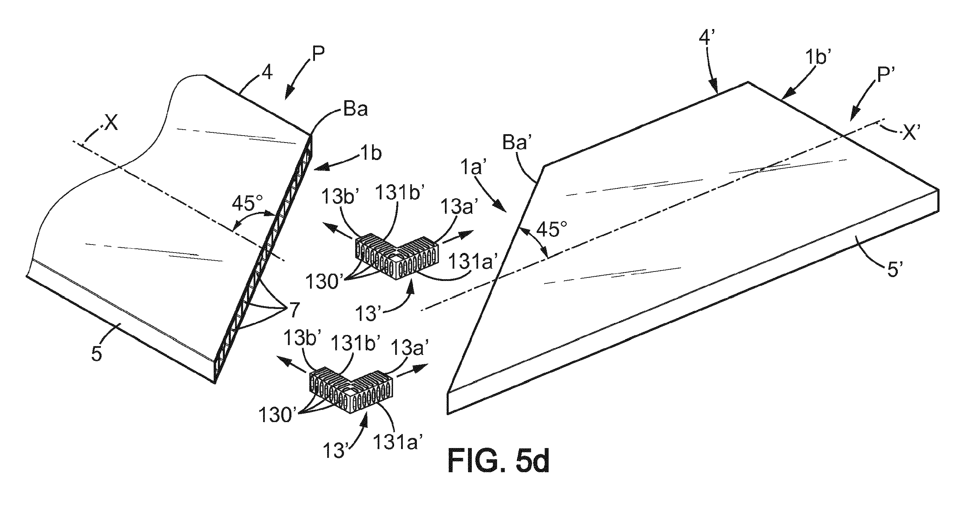

Dans un mode de réalisation préféré illustré à la figure 5d, illustrant en perspective un exemple d'assemblage de deux plans de travail P, P' ayant subi une découpe à 45°, le premier plan de travail P présente un biseau d'assemblage Ba au niveau de son deuxième bord d'extrémité 1b, ce biseau Ba formant un angle de 45° avec la direction d'extension X du premier plan de travail P, et le deuxième plan de travail P' présente un biseau d'assemblage Ba' au niveau de son premier bord d'extrémité 1a', ce biseau Ba' formant un angle de 45° avec la direction d'extension X' du deuxième plan de travail P'.

Dans ce mode de réalisation, les première et deuxième portions d'assemblage Pa, Pa' sont formés des biseaux d'assemblage Ba, Ba'.

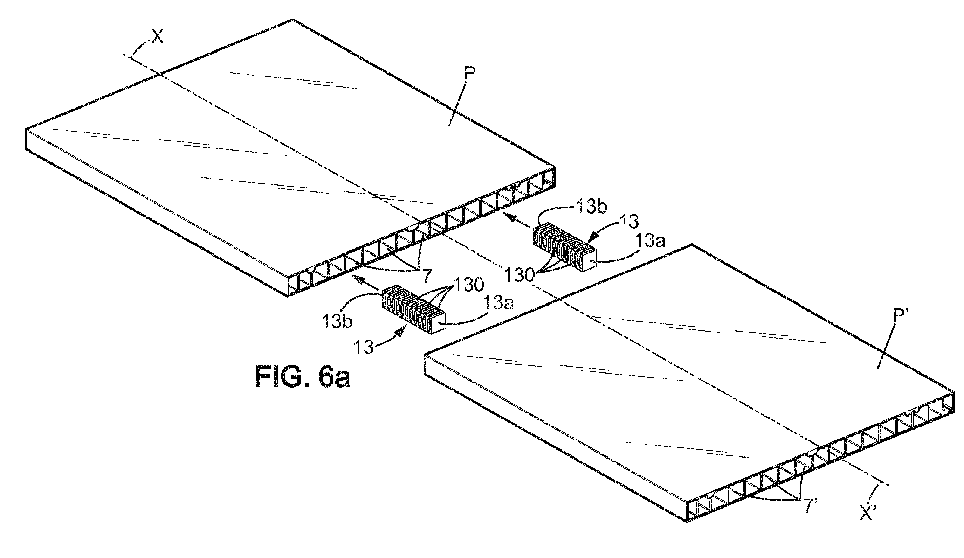

Comme visible sur cette figure 5d, et à la manière de ce qui a été décrit en relation avec les figures 5c et 6a, dans ce mode de réalisation, on met en oeuvre des éléments mâles 13' d'assemblage. Ici, ces éléments mâles présentent chacun une première portion 131a' présentant une section transversale complémentaire de celles des cavités 7' du deuxième plans de travail P' et présentant une première extrémité 13a', et une deuxième extrémité, et une deuxième portion 131b' présentant une section transversale complémentaire de celles des cavités 7 du premier plans de travail P et présentant une deuxième extrémité 13b'. Les premières et deuxièmes portions 131a', 131b' des éléments mâles 13' sont reliées entre elles au niveau de leurs deuxièmes extrémités et s'étendent sensiblement perpendiculairement. Ces première et deuxième portions 131a', 131b' peuvent éventuellement être pourvues d'ailettes de rattrapage de jeu et de serrage 130' semblables à celles-décrites précédemment en relation avec les figures 5c et 6a.

Dans ce mode de réalisation, pour assembler le premier plan de travail P au deuxième plan de travail P', on insère, par exemple avec serrage, les premières portions 131a' de chaque élément mâle 13 à l'intérieur d'une cavité 7' associé du deuxième plan de travail P', l'extrémité 13a' de cette première portion 131a' s'étendant à l'intérieur de la cavité 7' associée. Puis on amène le premier plan de travail P et on insère, par exemple avec serrage, les deuxièmes portions 131b' de chaque élément mâle 13 à l'intérieur d'une cavité 7 associé du premier plan de travail P, l'extrémité 13b' de cette deuxième portion 131b' s'étendant à l'intérieur de la cavité 7 associée.

En variante ou en complément, on peut prévoir un dispositif d'assemblage mettant en oeuvre des tirants tel que cela sera décrit plus en détails en référence à la figure 7.

Dans l'exemple représenté à la figure 6, les deux plans de travail P, P' sont assemblés l'un à l'autre avec leur directions d'extension X, X' s'étendant dans le prolongement l'une de l'autre. Autrement dit, dans l'exemple d'assemblage selon la figure 6, les directions d'extension des premier et deuxième plans de travail P, P' sont confondues, et les deux plans de travail P, P' sont assemblés de sorte à définir un plan de travail de dimension accrue dans la direction d'extension X.

Dans ce mode de réalisation illustré à la figure 6, la première portion d'assemblage Pa est définie par le deuxième bord d'extrémité 1b du premier plan de travail P, et la deuxième portion d'assemblage Pa' est définie par le premier bord d'extrémité 1a' du deuxième plan de travail.

A nouveau dans ce mode de réalisation, le dispositif d'assemblage entre les deux plans de travail P, P' peut par exemple comprendre une couche de colle appliquée sur les première et deuxième portions d'assemblage Pa, Pa'.

En variante ou en complément, on peut prévoir que le dispositif d'assemblage de deux plans de travail P, P' selon la configuration illustrée à la figure 6, comprenne un dispositif de fixation tel que celui représenté à la figure 6a.

Sur cette figure 6a, on observe que le dispositif d'assemblage comprend deux éléments mâles 13 semblables à ceux décrits en référence à la figure 5c, et présentant une section transversale complémentaire à celle des cavités 7, 7' des premier et deuxième plans de travail P, P'.

Ainsi, dans ce mode de réalisation, l'assemblage des premier et deuxième plans de travail P, P' est réalisé en insérant une première extrémité 13a de chacun des éléments mâles 13 à l'intérieur d'une cavité 7' associée du deuxième plan de travail P' et une deuxième extrémité 13b de chacun des éléments mâles 13 à l'intérieur d'une cavité 7 associée du premier plan de travail P.

Comme décrit en relation avec la figure 5c, ces éléments mâles peuvent être pourvus d'ailettes flexibles 130 permettant à la fois de rattraper les éventuels jeux pouvant exister entre les éléments mâles 13 et les cavités 7, 7' qui les reçoivent, mais également de générer un effort de serrage entre les éléments mâles 13 et les cavités 7, 7' afin d'assurer un assemblage fiable des deux plans de travail P, P'.

En variante ou en complément, on peut prévoir de fixer les éléments mâles 13 à l'intérieur des cavités 7, 7' des premiers et deuxième plans de travail P, P' à assembler par collage et/ou par vissage à travers les plateaux inférieurs 3 des premier et deuxième plans de travail P, P'.

Les assemblages de deux plans de travail P, P' selon les configurations illustrées aux figures 4a, 4b, 5a, 5b et 6 peuvent également, et de manière plus classique, être réalisés au moyen d'un dispositif d'assemblage comprenant un profilé d'assemblage présentant un premier logement de réception de la première portion d'assemblage Pa appartenant au premier plan de travail P et un deuxième logement de réception de la deuxième portion d'assemblage Pa' appartenant au deuxième plan de travail P'.

Une telle technique d'assemblage sera décrite plus loin en relation avec la figure 1 et en se référant en particulier aux configurations d'assemblage illustrées sur les figures 5a et 6.

Enfin, quelle que soit la configuration d'assemblage considérée parmi celles illustrées sur les figures 4a, 4b, 5a, 5b et 6, le dispositif d'assemblage peut avantageusement mettre en oeuvre un système de tirants tel qu'illustré à la figure 7.

Comme visible sur cette figure 7, qui illustre schématiquement en vue de dessous un assemblage entre un premier P et un deuxième P' plans de travail, le système de tirants appartenant au dispositif d'assemblage comprend deux tirants 15 espacés l'un de l'autre afin de renforcer la stabilité de l'assemblage des deux plans de travail P, P'.

Chaque tirant 15 comprend une tige filetée 150 présentant une première extrémité pourvue d'une tête présentant une empreinte destinée à recevoir un outil, tel qu'une empreinte creuse hexagonale destinée à recevoir une clé à section hexagonale, ou présentant un contour extérieur adapté pour coopérer avec un outil, tel qu'un contour hexagonal adapté pour coopérer avec une clé à pipe à empreinte complémentaire, et une deuxième extrémité libre.

Un premier élément d'appui 151 présentant des ailettes latérales d'appui est monté fou en rotation et en translation sur la tige filetée 150 et s'étend au voisinage de la tête de vis. Un deuxième élément d'appui 152 présentant également des ailettes latérales d'appui est solidaire d'un manchon taraudé vissé sur la tige filetée 150 au voisinage de son extrémité libre.

Dans l'assemblage illustré sur cette figure 7, chacun des plateaux inférieurs 3, 3' des premier et deuxième plans de travail P, P' à assembler présente deux découpes en clé de serrure 301, 301' comprenant une portion globalement circulaire 302, 302' formée à l'écart de la portion d'assemblage Pa, Pa' du plan de travail associé P, P' et une portion globalement rectiligne 303, 303' s'étendant depuis la portion globalement circulaire 302, 302' jusqu'à la portion d'assemblage Pa, Pa' du plan de travail associé P, P'. Ces découpes en clé de serrure 301, 301' ne débouchent par à travers les plateaux supérieurs des premier et deuxième plans de travail P, P' de façon à ce que l'assemblage des deux plans de travail ne soit pas visible pour un utilisateur.

Dans un tel système, et tel que visible sur la figure 7, pour assembler les premiers et deuxièmes plans de travail P, P', ceux-ci P, P' sont positionnés entre eux de sorte à placer en regard deux à deux les portions rectilignes 303, 303' des découpes en clé de serrure 301, 301' formées dans les plateaux inférieurs 3, 3'. Les tirants 15 sont alors mis en place au niveau de ces découpes 301, 301' avec les premiers éléments d'appui 151 insérés dans les portions globalement circulaires 302' des découpes 301' formées par exemple dans le plateau inférieur 3' du deuxième plan de travail P' et prenant appui contre les bords de ces portions globalement circulaires 302', et avec les deuxièmes éléments d'appui 152 insérés dans les portions globalement circulaires 302 des découpes 301 formées par exemple dans le plateau inférieur 3 du premier plan de travail P et prenant appui contre les bords de ces portions globalement circulaires 302.

Ainsi, dans une telle configuration, le serrage de l'assemblage entre le premier et le deuxième plan de travail P, P' est réalisé en faisant tourner les tiges filetées 150 à l'aide d'un outil coopérant avec les têtes de vis, cette rotation provoquant le déplacement selon l'axe des tiges 150 des deuxièmes éléments d'appui 152 par coopération avec leur manchon taraudé associé. On peut ainsi rapprocher les deuxièmes éléments d'appui 152 en direction des premiers éléments d'appui 151 et ainsi provoquer le serrage de l'assemblage des premier et deuxième plans de travail P, P'.

Un tel système d'assemblage à tirants pourra être adapté aux différentes configurations d'assemblage envisagées dans le cadre de la présente invention et illustrées aux figures 4a, 4b, 5a, 5b et 6.

Une autre technique d'assemblage, alternative ou complémentaires à celles décrites précédemment, peut également mettre en oeuvre un profilé d'assemblage s'étendant entre les portions d'assemblage Pa, Pa' des plans de travail P, P' à assembler.

Ainsi, en revenant à la figure 1, on observe qu'un profilé 12 peut être fixé au niveau du deuxième bord d'extrémité 1b d'un premier plan de travail P. Ce profilé 12 peut par exemple présenter une section transversale en I comprenant une âme centrale destinée à s'étendre entre les portions d'assemblage Pa, Pa' des plans de travail à assembler P, P' et deux chants supérieur et inférieur définissant entre eux des logements de réception respectifs des bords des premier et deuxième plans de travail P, P' à assembler.

A cet effet, et selon une disposition avantageuse de l'invention, le plateau supérieur 2, le plateau inférieur 3, le chant avant 4, le chant arrière 5 et/ou les cloisons de rigidification 6 présentent localement des renflements ou surépaisseurs 9 prévus pour recevoir des éléments de fixation, tels que des vis, permettant de fixer un profilé d'assemblage 12 de deux plans de travail adjacents.

Ainsi, et tel que visible sur la figure 1, lorsque l'on souhaite fixer un tel profilé d'assemblage 12 au niveau du deuxième bord d'extrémité 1b d'un premier plan de travail, on amène des perçages prévus dans ce profilé 12, par exemple réalisé dans l'âme centrale de la section en I, en regard des renflements locaux 9 et on introduit des éléments de fixation tels que des vis (illustrées uniquement par leurs traits d'axe sur la figure 1) à travers les perçages et les renflements associés.

Pour assembler un deuxième plan de travail P' à un tel premier plan de travail P équipé du profilé 12, on amène un bord du deuxième plan de travail P' dans le logement associé du profilé 12 prévu entre les chants supérieur et inférieur. Dans une étape subséquente, des éléments de fixation, tels que des vis (illustrées uniquement par leurs traits d'axe sur la figure 1), sont introduits à travers des perçages prévus sur le chant inférieur du profilé et sont fixés à travers le plateau inférieur 3' du deuxième plan de travail P'.

Pour réaliser un plan de travail selon l'invention, on prépare dans une première phase un mélange de particules constituées de fibres naturelles PFN et de matière plastique MP. Puis, on extrude le mélange obtenu à travers une filière d'extrusion selon une direction d'extrusion correspondant à la direction d'extension X du plan de travail P. On arrête d'extruder le mélange et/ou ou coupe le plan de travail P dans la direction transverse Y lorsque le plan de travail extrudé présente la longueur souhaitée dans la direction d'extension X.

Un fois un tel plan de travail obtenu, on pourra par exemple le fixer par l'intermédiaire de son plateau inférieur 3 sur un meuble 10 tel qu'un meuble équipant une cuisine ou une salle de bain, notamment des caissons de rangement équipés ou non d'une ou plusieurs portes en façade, un ilot central présentant en son sein différents tiroirs et placards de rangement, etc...

Toutefois, bien que dans ce qui précède le plan de travail selon l'invention ait été décrit et illustré sur les figures comme équipant un meuble, notamment un meuble de cuisine ou de salle de bain, on pourrait prévoir de mettre en place un tel plan de travail sur un pied ou un piètement de sorte à former par exemple un plateau de table ou encore un plateau de bar sans sortir du cadre de la présente invention.

## Revendications

1. Plan de travail (P), notamment pour cuisine ou salle de bain, obtenu par extrusion selon une direction d'extension (X) comprenant un corps principal (1) présentant :
- un plateau supérieur (2) s'étendant dans la direction d'extension (X) entre un premier bord d'extrémité (2a) et un deuxième bord d'extrémité (2b), et dans une direction transverse (Y) perpendiculaire à la direction d'extension (X) entre un bord avant (2c) et un bord arrière (2d) ;
- un plateau inférieur (3) adapté pour être fixé sur un meuble (10) ou un pied à équiper d'un tel plan (1) et s'étendant dans la direction d'extension (X) entre un premier bord d'extrémité (3a) et un deuxième bord d'extrémité (3b), et dans la direction transverse (Y) perpendiculaire à la direction d'extension (X) entre un bord avant (3c) et un bord arrière (3d) ;
- un chant avant (4) s'étendant dans la direction d'extension (X) entre un premier bord d'extrémité (4a) et un deuxième bord d'extrémité (4b) et reliant le bord avant (2c) du plateau supérieur (2) et le bord avant (3c) du plateau inférieur (3) dans une direction d'élévation (Z) perpendiculaire à la direction d'extension (X) et à la direction transverse (Y) ;
- un chant arrière (5) s'étendant dans la direction d'extension (X) entre un premier bord d'extrémité (5a) et un deuxième bord d'extrémité (5b) et reliant le bord arrière (2d) du plateau supérieur (2) et le bord arrière (3d) du plateau inférieur (3) dans la direction d'élévation (Z), et ;
- une pluralité de cloisons de rigidification (6) s'étendant essentiellement parallèlement les unes aux autres dans la direction d'extension (X) entre un premier bord d'extrémité (6a) et un deuxième bord d'extrémité (6b) et reliant les plateaux supérieur et inférieur (2, 3) dans la direction d'élévation (Z) de façon à définir entre elles des cavités longitudinales creuses (7) dans un espace intérieur (E) de corps principal délimité par les plateaux supérieur et inférieur (2, 3) et les chants avant et arrière (4, 5) ;
dans lequel :
- les premiers bords d'extrémité (2a, 3a, 4a, 5a, 6a) des plateaux supérieur et inférieur (2, 3), des chants avant et arrière (4, 5) et des cloisons de rigidification (6) définissent un premier bord d'extrémité (1a) du plan de travail (1) et les deuxièmes bords d'extrémité (2b, 3b, 4b, 5b, 6b) des plateaux supérieur et inférieur (2, 3), des chants avant et arrière (4, 5) et des cloisons de rigidification (6) définissent un deuxième bord d'extrémité (1b) du plan de travail (1), et ;
- les plateaux supérieur et inférieur (2, 3) et les chants avant et arrière (4, 5) présentent chacun une face intérieure (20, 30, 40, 50) orientée vers l'espace intérieur (E) du corps principal (1) et une face extérieure (21, 31, 41, 51) opposée à la face intérieure (20, 30, 40, 50),
**caractérisé en ce que** ledit corps principal (1) est obtenu par extrusion dans une direction d'extrusion correspondant à la direction d'extension (X) d'un mélange de particules constituées de fibres naturelles (PFN) et de matière plastique (MP).

2. Plan de travail (P) selon la revendication 1, dans lequel le mélange à partir duquel le plan de travail est obtenu comprend entre 50% et 85% en masse, et de préférence 60% en masse, de particules de fibres naturelles (PFN).

3. Plan de travail (P) selon l'une quelconque des revendications 1 et 2, dans lequel la taille des particules de fibres naturelles (PFN) entrant dans la composition du mélange à partir duquel le plan de travail est obtenu présente une taille moyenne de particule comprise entre 0,1 mm et 3 mm, et de préférence entre 0,5 et 0,8 mm.

4. Plan de travail (P) selon l'une quelconque des revendications 1 à 3, dans lequel le mélange à partir duquel le plan de travail est obtenu comprend entre 15% et 50% en masse, et de préférence 40% en masse, de matière plastique (MP), et entre 0% et 5% en masse d'adjuvants.

5. Plan de travail (P) selon l'une quelconque des revendications 1 à 4, dans lequel les cloisons de rigidification (6) présentent un écartement variable dans la direction transverse (Y).

6. Plan de travail (P) selon l'une quelconque des revendications 1 à 5, dans lequel la face extérieure (31) du plateau inférieur (3) présente une rainure (32) s'étendant dans la direction d'extension (X), au voisinage du bord avant (3c) et/ou du bord arrière (3d) dudit plateau inférieur (3).

7. Plan de travail (P) selon l'une quelconque des revendications 1 à 6, dans lequel le plateau supérieur (2), le plateau inférieur (3), le chant avant (4) et/ou le chant arrière (5) est(sont) revêtu(s) sur leur(s) face(s) extérieures (20, 30, 40, 50) d'un plaquage décoratif (8) réalisé en un matériau distinct de celui du corps principal (1).

8. Plan de travail (P) selon la revendication 7, dans lequel le plaquage décoratif (8) et le corps principal (1) sont obtenus par co-extrusion.

9. Plan de travail (P) selon l'une quelconque des revendications 1 à 8, dans lequel on prévoit une découpe (D) définissant une ouverture (O) de réception d'un équipement (11), tel qu'un évier, un lavabo, une plaque de cuisson ou autre, ladite découpe (D) définissant dans la direction transverse (Y) un bord de découpe avant (Dd) et un bord de découpe arrière (Dc) sur le plateau supérieur (2), et dans lequel au moins deux cloisons de rigidification (6) sont prévues entre le bord de découpe avant (Dd) et le chant avant (4) d'une part, et entre le bord de découpe arrière (Dc) et le chant arrière (5) d'autre part.

10. Plan de travail (P) selon l'une quelconque des revendications 1 à 9, dans lequel le plateau supérieur (2), le plateau inférieur (3), le chant avant (4), le chant arrière (5) et les cloisons de rigidification (6) présentent chacun une épaisseur sensiblement constante, et dans lequel ledit plateau supérieur (2), ledit plateau inférieur (3), ledit chant avant (4), ledit chant arrière (5) et/ou lesdites cloisons de rigidification (6) présentent localement des renflements (9) s'étendant dans la direction d'extension (X) et adaptés pour recevoir un élément de fixation d'un profilé d'assemblage (12) de deux plans de travail (1) adjacents.

11. Ensemble comprenant un plan de travail (P) selon l'une quelconque des revendications 1 à 10 et un meuble (10), notamment de cuisine ou de salle de bain, sur lequel est fixé le plateau inférieur (3) du plan de travail.

12. Procédé de réalisation d'un ensemble selon la revendication 11, comprenant les étapes suivante :
- on prépare un mélange de particules de fibres naturelles (PFN) et de matière plastique (MP) ;
- on extrude le mélange obtenu à travers une filière d'extrusion selon une direction d'extrusion correspondant à la direction d'extension (X) du plan de travail ;
- on fournit un meuble (10), notamment de cuisine ou de salle de bain, et :
- on fixe le plateau inférieur (3) du plan de travail (P) sur le meuble (10).

13. Ensemble comprenant un plan de travail (P) selon la revendication 9 et un équipement (11), tel qu'un évier, un lavabo, une plaque de cuisson, reçu à l'intérieur de l'ouverture (O), un dispositif d'étanchéité (14) étant prévu entre ledit plan de travail (P) et ledit équipement (11) au voisinage de ladite ouverture (O).

14. Ensemble comprenant :
- un premier et un deuxième plans de travail (P, P') selon l'une quelconque des revendications 1 à 10, le premier plan de travail (P) s'étendant selon une première direction d'extension (X) et présentant une première portion d'assemblage (Pa) et le deuxième plan de travail (P') s'étendant selon une deuxième direction d'extension (X') et présentant une deuxième portion d'assemblage (Pa'), et ;
- un dispositif d'assemblage s'étendant entre la première et la deuxième portions d'assemblage (Pa, Pa').

15. Ensemble selon la revendication 14, dans lequel :
- la première direction d'extension (X) et la deuxième direction d'extension (X') sont sensiblement parallèles, et ;
- la première portion d'assemblage (Pa) est définie sur le chant avant (4) du premier plan de travail (P), et la deuxième portion d'assemblage (Pa') est définie sur le chant arrière (5') du deuxième plan de travail (P').

16. Ensemble selon la revendication 15, dans lequel :
- le plateau inférieur (3) du premier plan de travail (1) présente dans la direction d'élévation (Z) un décrochement (33) s'étendant selon la première direction d'extension (X) et comprenant une première portion (331) s'étendant dans la direction d'élévation (Z) et une deuxième portion (332) s'étendant dans la direction transverse (Y) et se terminant par le bord avant (3c) relié au chant avant (4), lesdites première et deuxième portions (331, 332) définissant avec ledit chant avant (4) la première portion d'assemblage (Pa), et ;
- le plateau supérieur (2') du deuxième plan de travail (P') présente dans la direction d'élévation (Z) un décrochement (23') s'étendant selon la deuxième direction d'extension (X') et comprenant une première portion (231') s'étendant dans la direction d'élévation (Z') et une deuxième portion (232') s'étendant dans la direction transverse (Y') et se terminant par le bord arrière (2d') relié au chant arrière (5), lesdites première et deuxième portions (231', 232') définissant avec ledit chant arrière (5') la deuxième portion d'assemblage (Pa').

17. Ensemble selon la revendication 14, dans lequel :
- la première direction d'extension (X) et la deuxième direction d'extension (X') sont sensiblement perpendiculaires ;
- la première portion d'assemblage (Pa) est définie par le deuxième bord d'extrémité (1b) du premier plan de travail (P), et ;
- la deuxième portion d'assemblage (Pa') est définie sur le chant avant (4') du deuxième plan de travail (P').

18. Ensemble selon la revendication 17, dans lequel le dispositif d'assemblage comprend au moins deux éléments mâles (13) présentant une section transversale complémentaire de celles des cavités (7) du premier plan de travail (P), lesdits éléments mâles (13) présentant chacun dans la direction d'extension (X) du premier plan de travail (P) une première extrémité (13a) et une deuxième extrémité (13b), ladite première extrémité (13a) étant fixée sur le deuxième plan de travail (P'), en particulier sur le chant avant (4') du deuxième plan de travail (P'), et ladite deuxième extrémité (13b) s'étendant à l'intérieur de la cavité (7) associée du premier plan de travail (P).

19. Ensemble selon la revendication 14, dans lequel :
- la première direction d'extension (X) et la deuxième direction d'extension (X') sont sensiblement perpendiculaires ;
- le premier plan de travail (P) présente un biseau d'assemblage (Ba) au niveau du deuxième bord d'extrémité (1b), ledit biseau d'assemblage (Ba) formant un angle de 45° avec la direction d'extension (X) dudit premier plan de travail (P),
- le deuxième plan de travail (P') présente un biseau d'assemblage (Ba') au niveau du premier bord d'extrémité (1a'), ledit biseau d'assemblage (Ba') formant un angle de 45° avec la direction d'extension (X') dudit deuxième plan de travail (P'),
- la première portion d'assemblage (Pa) est définie par le premier biseau d'assemblage (Ba) et la deuxième portion d'assemblage (Pa') est définie par le deuxième biseau d'assemblage (Ba').

20. Ensemble selon la revendication 19, dans lequel le dispositif d'assemblage comprend au moins deux éléments mâles (13') comprenant :
- une première portion (131a') présentant une section transversale complémentaire de celles des cavités (7') du deuxième plans de travail (P') et présentant une première extrémité (13a') s'étendant à l'intérieur de la cavité (7') associée du deuxième plan de travail (P'), et une deuxième extrémité, et ;
- une deuxième portion (131b') présentant une section transversale complémentaire de celles des cavités (7) du premier plans de travail (P) et présentant une deuxième extrémité (13b') s'étendant à l'intérieur de la cavité (7) associée du premier plan de travail (P) et une deuxième extrémité, lesdites premières et deuxièmes portions (131a', 131b') étant reliées entre elles au niveau desdites deuxièmes extrémités et s'étendant sensiblement perpendiculairement.

21. Ensemble selon la revendication 14, dans lequel :
- la première direction d'extension (X) et la deuxième direction d'extension (X') sont confondues, et ;
- la première portion d'assemblage (Pa) est définie par le deuxième bord d'extrémité (1b) du premier plan de travail (P) et la deuxième portion d'assemblage (Pa') est définie par le premier bord d'extrémité (1a') du deuxième plan de travail.

22. Ensemble selon la revendication 21, dans lequel le dispositif d'assemblage comprend au moins deux éléments mâles (13) présentant une section transversale complémentaire de celles des cavités (7, 7') des premier et deuxième plans de travail (P, P'), lesdits éléments mâles (13) présentant chacun dans la direction d'extension (X) du premier plan de travail (P) une première extrémité (13a) et une deuxième extrémité (13b), ladite première extrémité (13a) s'étendant à l'intérieur de la cavité (7') associée du deuxième plan de travail (P') et ladite deuxième extrémité (13b) s'étendant à l'intérieur de la cavité (7) associée du premier plan de travail (P).

23. Ensemble selon l'une quelconque des revendications 14 à 22, dans lequel le dispositif d'assemblage comprend un profilé d'assemblage (12) présentant un premier logement recevant la première portion d'assemblage (Pa) du premier plan de travail (P) et un deuxième logement recevant la deuxième portion d'assemblage (Pa') du deuxième plan de travail (P').
